# EUROPÄISCHE PATENTSCHRIFT

(11) **EP 0 665 366 B1**
(45) Veröffentlichungstag und Bekanntmachung des Hinweises auf die Patenterteilung: **27.01.1999**
(21) Anmeldenummer: 94120706.0
(22) Anmeldetag: 27.12.1994
(51) Int. Cl.: F01N 7/14

(54) **Doppelwandige Abgasleitung**
Double wall exhaust pipe
Conduit de gaz d'échappement à paroi double

(30) Priorität: 31.12.1993 DE 4345052
(43) Veröffentlichungstag der Anmeldung: 02.08.1995
(60) Teilanmeldung: 98109809.8
(73) Patentinhaber: J. Eberspächer GmbH & Co., 73730 Esslingen (DE)
(72) Erfinder: Schaefer, Horst, D-66539 Neunkirchen (DE)
(74) Vertreter: Klunker . Schmitt-Nilson . Hirsch

(56) Entgegenhaltungen:
- EP-A- 0 047 527
- DE-A- 2 242 857
- DE-A- 2 406 650
- DE-C- 4 019 899
- JP-A- 3 081 136
- NN-A- 81 136
- NN-A- 242 857
- US-A- 4 022 019

## Beschreibung

Die Erfindung bezieht sich auf eine doppelwandige Abgasleitung mit einem Außenrohr und einem Innenrohr, das mit gewelltem Querschnitt vorgesehen ist und mindestens auf einem Teil seiner Länge an dem Außenrohr anliegt.

Doppelwandige Abgasleitungen sind aus dem Kraftfahrzeugbau bekannt. So zeigt beispielsweise US-A-4 022 019 eine doppelwandige Abgasleitung, bei der das Innenrohr im Längsschnitt durch die Abgasleitung gewellt ist. JP 3081136 zeigt eine doppelwandige Abgasleitung mit den Merkmalen des Oberbegriffs von Anspruch 1, bei der das Innenrohr in regelmäßigen Abständen an dem Außenrohr durch Punktschweißung befestigt ist. Speziell in Automobilen mit Abgaskatalysatoren werden doppelwandige Abgasleitungen mindestens in dem motornahen Teil des Abgassystems besonders häufig eingesetzt. Doppelwandige Abgasleitungen sind auch unter dem Begriff luftspaltisolierte Rohre bekannt. Der Luftspalt zwischen dem Außenrohr und dem Innenrohr erfüllt sowohl schallisolierende als auch wärmeisolierende Aufgaben. Besonders in der Kaltstartphase von Automobilen mit Katalysator kommt es darauf an, möglichst heiße Abgase dem Katalysator zuzuführen, um ein rasches Aufheizen auf Betriebstemperatur des Katalysators zu gewährleisten. Andererseits müssen an der Wagenunterseite selbst bei betriebsheißem Fahrzeug die einzelnen Teile des Abgassystems ausreichend kühl bleiben, um bei einem abgestellten Fahrzeug Entzünden z.B. von trockenem Gras oder Papier unter dem Fahrzeug zu vernindern.

Erfindungsgemäß zeichnet sich die doppelwandige Abgasleitung dadurch aus, daß die Anlage zwischen Außenrohr und Innenrohr so bemessen ist, daß in einem Bereich der Abgasleitung, der nicht gebogen ist, eine Relativbewegung in Längsrichtung zwischen Innenrohr und Außenrohr möglich ist.

Gegenüber den üblichen Innenrohren haben Innenrohre mit gewelltem Querschnitt den Vorteil, daß sie sich in dem Außenrohr selbst positionieren. Insbesondere müssen keine zusätzlichen Distanzhalteelemente vorgesehen sein, wie sie bisher speziell bei längeren Abgasleitungen gasleitungen oder bei besonders gekrümmten nötig waren. Vorzugsweise ist das Innenrohr so dimensioniert, daß es im kalten Zustand der Abgasleitung mit seinen Wellbergen innen in dem Außenrohr anliegt. Dies gilt mindestens für einige längs der Abgasleitung beabstandete Stellen. Dies gilt ferner mindestens für die Bereiche von Biegungen der Abgasleitung und dort ganz besonders für die Biegungsaußenseite. Andererseits ist es nicht zwingend erforderlich, daß das Innenrohr über den Umfang mit allen Wellbergen mit dem Außenrohr in Kontakt ist, bereits eine Anlage mit einzelnen, umfangsmäßig verteilten Wellbergen führt zu einer ausreichenden Zentrierung des Innenrohrs. Überhaupt ist, wiewohl bevorzugt, ein Anliegen zwischen Innenrohr und Außenrohr nicht unbedingt nötig.

Das Innenrohr muß nicht unbedingt gleichmäßig und rund gewellt sein, die erfindungsgemäßen Vorteile können auch mit mehreckigen oder unregelmäßigen Prägungen erhalten werden. Die Wellprägung muß nicht durchgehend über die ganze Länge des Innenrohrs ausgeführt sein. Als Extremfall kann man sich die Wellprägung auch in einzelne über die Länge verteilte Höcker aufgelöst vorstellen. Parallel zur Längsrichtung der Abgasleitung verlaufende Welltäler und Wellberge setzen dem Abgas den geringsten Strömungswiderstand entgegen und sind am einfachsten herzustellen. Soll, z.B. vor einem Katalysator, dem Abgasstrom eine Drall-Komponente mitgegeben werden, so kann das einfach durch Schrägstellen der Welltäler bzw. der Wellberge gegen die Längsrichtung der Abgasleitung erfolgen.

Besonders vorteilhaft ist eine Abgasleitung mit einem Innenrohr mit gewelltem Querschnitt, wenn diese eine Biegung aufweist, und wenn das Innenrohr mindestens im Bereich dieser Biegung an dem Außenrohr anliegt. Wie weiter hinten noch beschrieben werden wird, lassen sich derartige gebogene Abgasleitungen ganz besonders einfach herstellen, was zu deutlichen Einsparungen besonders bei den Personalkosten führt.

Vorzugsweise ist das Innenrohr an einem Ende der Abgasleitung an dem Außenrohr befestigt. Schweißen und ganz besonders Punktschweißen sind schnell herzustellende, günstige und haltbare Verbindungen, deren Anwendung hierfür bevorzugt ist. Das Innenrohr ist damit in seiner Längsrichtung relativ zu dem Außenrohr einseitig festgelegt.

Es ist ganz besonders bevorzugt, wenn das Innenrohr an einem Ende oder an beiden Enden der Abgasleitung mit Schiebesitz in dem Außenrohr angeordnet ist. Außenrohr und Innenrohr einer Abgasleitung erreichen im Einsatz unterschiedlich hohe Temperaturniveaus, was zu unterschiedlichen Wärmedehnungen führt. Dieser Unterschied kann bei Abgasleitungen mit etwa einem Meter Länge bereits einige Millimeter betragen und noch größer werden, wenn für das Innenrohr und für das Außenrohr Materialien mit unterschiedlichen Wärmeausdehnungskoeffizienten verwendet werden. Mit einem Schiebesitz werden Längenunterschiede zwischen dem Außenrohr und dem Innenrohr kompensiert, wenn sich beide mindestens über einen Teilbereich ihrer Länge relativ zueinander in Längsrichtung bewegen können. Es ist besonders günstig, wenn an den Enden, sowohl bei einem Schiebesitz als auch bei einem Ende, an dem Innenrohr und Außenrohr miteinander verbunden sind, das Innenrohr nicht gewellt ist. So wird eine unmittelbare Zuleitung großer Abgasmengen in den Raum zwischen Außenrohr und Innenrohr vermieden.

Vorzugsweise besitzt das Innenrohr eine geringere Wandstärke als das Außenrohr. Ein gewelltes Innenrohr kann eine ganz besonders geringe Wandstärke besitzen, da die Wellung in der Längsrichtung eine deutliche Versteifung des Rohres bewirkt.

Das Innenrohr kann vorzugsweise auch aus einem wärmefesteren Material als das Außenrohr bestehen. Bei der vorgesehenen Verwendung wird die Maximaltemperatur an dem Innenrohr erreicht. Selbst wenn das Außenrohr bereichsweise mit dem Innenrohr in Kontakt steht, werden sich an diesem keine derart hohen Temperaturen einstellen. Ein Grund dafür ist in der besseren Kühlung des Außenrohres und dem erheblich geringeren Wärmeübergang an einer Berührunsstelle zwischen zwei Metallteilen im Verhältnis zu einem Wärmeübergang im Vollmaterial zu suchen.

Die Erfindung bezieht sich ferner auf ein Verfahren zum Herstellen einer gebogenen, doppelwandigen Abgasleitung, wie sie im vorhergehenden beschrieben wurde, dadurch gekennzeichnet, daß das Innenrohr in das Außenrohr geschoben wird; und daß zum Biegen der Abgasleitung ein Dorn mit einem der Wellung des Innenrohrs angepaßten Kopf in die Abgasleitung eingeführt wird.

Bisher forderte speziell das Biegen doppelwandiger Abgasleitungen ein sehr aufwendiges Verfahren. Zum Zwecke des Biegens mußte der Spalt zwischen dem Innenrohr und dem Außenrohr mit einem Füllmaterial, z.B. Sand, gefüllt werden, um die Position des Innenrohres beim Biegen festzulegen. Das Befüllen und das Entleeren des Zwischenraumes mit dem Füllmaterial war äußerst zeit- und damit kostenaufwendig. Ganz besonders bei Abgasleitungen mit Schiebesitzen mußte beim Entleeren sehr sorgfältig vorgegangen werden, um ein Verschmutzen und damit ein Verklemmen des Schiebesitzes zu verhindern. Mit dem erfindungsgemäßen Verfahren zur Herstellung ist ein derartiges Befüllen mit einem Füllmaterial vor dem Biegen nicht mehr nötig, da das Innenrohr mit seiner Wellung eine innere Aussteifung des Außenrohrs bildet. Mindestens ein Dorn mit einem kugeligen Kopf kann zum Biegen in den vorgesehenen Biegebereich eingebracht werden und verhindert beim Biegen ein Zusammendrücken von Innenrohr und Außenrohr. Der kugelige Kopf des Dorns ist in seiner äußeren Form an die Wellung des Innenrohrs angepaßt, somit bleibt die Wellung des Innenrohrs im Bereich der Biegung erhalten. Vorzugsweise wird nur ein Dorn als Wellungsabstützung in den Biegebereich eingebracht, und die Biegekräfte werden über ein Angreifen von außen auf die Abgasleitung übertragen. Nach dem Biegen muß nur noch der Dorn entfernt werden.

Die erfindungsgemäße Abgasleitung besitzt neben den Vorteilen bei der Herstellung auch Vorteile, die sich im Betrieb positiv bemerkbar machen. Der Wärmeverlust während der Kaltstartphase ist besonders gering, denn obwohl durch die Wellung des Innenrohrs die Fläche des Innenrohrs vergrößert wird, wird das von dem Abgas zu erwärmende Volumen des Innenrohrs eher geringer, da das Innenrohr mit einer deutlich geringeren Wandstärke hergestellt werden kann. Im Lastbetrieb ergeben sich durch die zumindest streckenweise Anlage von Bereichen des Innenrohrs an das Außenrohr etwas größere Wärmeverluste des Abgases an die Umgebung als bei üblichen Abgasleitungen, was in diesem Betriebszustand sogar wünschenswert ist.

Die Erfindung und Weiterbildungen der Erfindung werden nachfolgend anhand eines teilweise schematisiert dargestellten Ausführungsbeispiels noch näher erläutert. Es zeigt:
- **Fig. 1**: Draufsicht auf einen Horizontalschnitt durch eine Abgasleitung;
- **Fig. 2**: Querschnitt durch eine erfindungsgemäße Abgasleitung mit Außenrohr und gewelltem Innenrohr entlang der Linie 1-1 von Fig. 1.

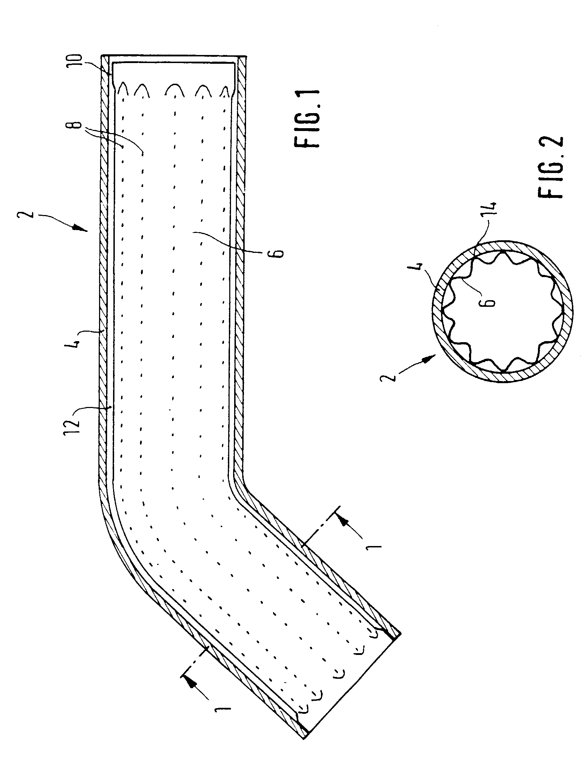

**Fig. 1** stellt eine doppelwandige Abgasleitung 2 dar, wie sie beispielsweise in einem Kraftfahrzeug zwischen Motor und Katalysator Verwendung finden kann. Die Abgasleitung 2 besteht aus einem Außenrohr 4, dessen geschnitten dargestellter Bereich in **Fig. 1** schraffiert ist, und einem gewellten Innenrohr 6. Die Wellung des Innenrohrs 6 wird durch punktierte Linien 8 dargestellt, die die Wellenberge 14 des geschnittenen Innenrohrs 6 markieren.

Im kalten Zustand liegt das Innenrohr 6 entlang der Wellberge 14 an der Innenseite des Außenrohrs 4 an. Die Anlagekräfte sind so gering, daß mindestens in den nichtgebogenen Leitungsbereichen in Längsrichtung eine Relativbewegung zwischen dem Außenrohr 4 und dem Innenrohr 6 möglich ist. Das Innenrohr 6 kann auch so dimensioniert sein, daß es in den nicht gebogenen Leitungsbereichen nicht an dem Außenrohr 4 anliegt und in einem Biegungsbereich eine Anlage besteht, die z.B. beim Biegen durch die Querschnittsverformung von Außenrohr 4 und Innenrohr 6 zustandekommt.

Im linken Endbereich der Abgasleitung 2 ist eine feste Verbindung zwischen dem Innenrohr 6 und dem Außenrohr 4 dargestellt. Das Innenrohr 6 ist aufgeweitet, liegt ungewellt auf eine gewisse Länge an dem Außenrohr 4 an und ist mit Punktschweißungen an diesem befestigt. Die halbkreisförmigen Linien in der **Fig. 1** nahe den gepunkteten Linien zeigen das Auslaufen der Wellung des Innenrohrs 6 zu dem ungewellten Endbereich an.

Demgegenüber zeigt der rechte Endbereich der Abgasleitung einen Schiebesitz des Innenrohrs 6 in dem Außenrohr 4. Das Innenrohr 6 ist hier ebenfalls ungewellt und gerade so groß, daß es mit dem Außenrohr 4 in Anlage kommt, jedoch gegen dieses in Längsrichtung leicht verschoben werden kann. Längenunterschiede des Außenrohrs 4 und des Innenrohrs 6, wie sie beispielsweise bei thermischen Längenänderungen während des Betriebes häufig auftreten, können in einem solchen Schiebesitz leicht kompensiert werden, so daß Spannungen, welche das Bauteil zerstören könnten, nicht auftreten können.

Der Luftspalt 12 zwischen dem Außenrohr 4 und dem Innenrohr 6 ist bei einer derartigen Ausbildung der Endbereiche von dem abgasführenden Bereich so abgeschlossen, daß nur in geringem Maße Abgase in den Luftspalt 12 gelangen können.

Wenn auch in der **Fig. 1** die Wandstärke des Außenrohrs 4 zum Zweck einer deutlicheren Darstellung übertrieben dick dargestellt ist, so trifft es dennoch zu, daß die Wandstärke des Innenrohrs 6 wesentlich dünner gewählt werden kann als die des Außenrohrs 4. Durch die in Längsrichtung verlaufenden Berge und Täler der Wellung erfährt das Innenrohr 6 eine deutliche Stabilitätsverbesserung, demzufolge können für ein gewelltes Innenrohr 6 noch wesentlich geringere Wandstärken vorgesehen werden, als das bei üblichen doppelwandigen Abgasleitungen möglich war. Die minimale Wandstärke wird nur durch die Abrasion des Abgases bzw., falls eine Biegung vorgesehen ist, durch die Zugspannung im Bereich der Biegung bestimmt. Während für das Außenrohr 4 häufig ein übliches Stahlblech ausreichend ist, wird üblicherweise für das Innenrohr ein korrosionsbeständigeres und wärmebeständigeres Material verwendet. Durch die geringere Wandstärke ist eine Material- und Gewichtsersparnis möglich.

In Fig. 2 ist der Querschnitt durch die Abgasleitung 2 entlang der Linie 1-1 dargestellt. Man erkennt das Außenrohr 4 und das gewellte Innenrohr 6 das mit den Wellbergen 14 die Innenseite des Außenrohr 4 berührt. Der Außenumfang des Innenrohrs 6 ist so bemessen, daß mindestens in den Bereichen, die nicht gebogen wurden, eine Relativbewegung zwischen Innenrohr 6 und Außenrohr 4 leicht möglich ist.

## Patentansprüche

1. Doppelwandige Abgasleitung (2) mit einem Außenrohr (4) und einem Innenrohr (6), das mit gewelltem Querschnitt vorgesehen ist und mindestens auf einem Teil seiner Länge an dem Außenrohr (4) anliegt,
**dadurch gekennzeichnet,**
daß die Anlage zwischen Außenrohr (4) und Innenrohr (6) so bemessen ist, daß in einem Bereich der Abgasleitung (2), der nicht gebogen ist, eine Relativbewegung in Längsrichtung zwischen Innenrohr (6) und Außenrohr (4) möglich ist.

2. Abgasleitung (2) nach Anspruch 1,
**dadurch gekennzeichnet,**
daß sie eine Biegung aufweist und daß das Innenrohr (6) im Bereich der Biegung an dem Außenrohr (4) anliegt.

3. Abgasleitung nach Anspruch 1 oder 2,
**dadurch gekennzeichnet,**
daß das Innenrohr an einem Ende der Abgasleitung (2) an dem Außenrohr (4) befestigt ist.

4. Abgasleitung nach einem der Ansprüche 1 bis 3,
**dadurch gekennzeichnet,**
daß das Innenrohr (6) an einem Ende oder beiden Enden der Abgasleitung (2) mit Schiebesitz (10) in dem Außenrohr (4) angeordnet ist.

5. Abgasleitung nach einem der Ansprüche 1 bis 4,
**dadurch gekennzeichnet,**
daß das Innenrohr (6) eine geringere Wandstärke als das Außenrohr (4) besitzt.

6. Abgasleitung nach einem der Ansprüche 1 bis 5,
**dadurch gekennzeichnet,**
daß das Innenrohr (6) aus einem wärmefesteren Material als das Außenrohr (4) besteht.

7. Verfahren zum Herstellen einer doppelwandigen Abgasleitung (2) nach einem der Ansprüche 2 bis 6,
**dadurch gekennzeichnet,**
daß das Innenrohr (6) in das Außenrohr (4) geschoben wird;
und daß zum Biegen der Abgasleitung (2) ein Dorn mit einem der Wellung des Innenrohrs (6) angepaßten Kopf in die Abgasleitung (2) eingeführt wird.

## Claims

1. Double-wall exhaust pipe (2) comprising an outer tube (4) and an inner tube (6) which is provided with a corrugated cross-section and bears against the outer tube (4) at least over part of its length, characterized in that the part where the inner tube (6) bears against the outer tube (4) is dimensioned such that a relative movement between inner tube (6) and outer tube (4) is possible in the longitudinal direction in a region of the exhaust pipe (2) which is not bent.

2. Exhaust pipe (2) according to Claim 1, characterized in that it has a bend and in that the inner tube (6) bears against the outer tube (4) in the region of the bend.

3. Exhaust pipe according to Claim 1 or 2, characterized in that the inner tube is fastened to the outer tube (4) at one end of the exhaust pipe (2).

4. Exhaust pipe according to one of Claims 1 to 3, characterized in that the inner tube (6) is arranged with a sliding fit (10) in the outer tube (4) at one or both ends of the exhaust pipe (2).

5. Exhaust pipe according to one of Claims 1 to 4, characterized in that the inner tube (6) has a smaller wall thickness than the outer tube (4).

6. Exhaust pipe according to one of Claims 1 to 5, characterized in that the inner tube (6) consists of a more heat-resistant material than the outer tube (4).

7. Process for producing a double-wall exhaust pipe (2) according to one of Claims 2 to 6, characterized in that the inner tube (6) is pushed into the outer tube (4); and in that, for bending the exhaust pipe (2), a mandrel with a head adapted to the corrugation of the inner tube (6) is introduced into the exhaust pipe (2).

## Revendications

1. Conduit d'échappement (2) à paroi double, avec un tube extérieur (4) et avec un tube intérieur (6) qui est prévu de section ondulée et qui s'applique sur au moins une partie de sa longueur contre le tube extérieur (4), **caractérisé** en ce que l'application entre le tube extérieur (4) et le tube intérieur (6) est conçue de façon à permettre, dans une région du conduit d'échappement (2) qui n'est pas cintrée, un mouvement relatif en direction longitudinale entre le tube intérieur (6) et le tube extérieur (4).

2. Conduit d'échappement selon la revendication 1, **caractérisé** en ce qu'il présente un cintrage, et en ce que le tube intérieur (6) s'applique contre le tube extérieur (4) dans la région du cintrage.

3. Conduit d'échappement selon la revendication 1 ou 2, **caractérisé** en ce que le tube intérieur est fixé sur le tube extérieur (4) à une extrémité du conduit d'échappement (2).

4. Conduit d'échappement selon une des revendications 1 à 3, **caractérisé** en ce que le tube intérieur (6) est disposé avec un ajustement glissant (10) dans le tube extérieur (4) à une extrémité ou aux deux extrémités du conduit d'échappement (2).

5. Conduit d'échappement selon une des revendications 1 à 4, **caractérisé** en ce que le tube intérieur (6) possède une épaisseur de paroi inférieure à celle du tube extérieur (4).

6. Conduit d'échappement selon une des revendications 1 à 5, **caractérisé** en ce que le tube intérieur (6) est réalisé en un matériau plus résistant à la chaleur que celui du tube extérieur (4).

7. Procédé de fabrication d'un conduit d'échappement (2) à paroi double selon une des revendications 2 à 6,
**caractérisé** en ce qu'on enfile le tube intérieur (6) dans le tube extérieur (4), et en ce que, pour cintrer le conduit d'échappement (2), on introduit dans le conduit d'échappement (2) un mandrin dont la tête est adaptée à l'ondulation du tube intérieur (6).
